## Europäisches Patentamt
## European Patent Office
## Office européen des brevets

(19)

(11) Veröffentlichungsnummer : **0 086 478**
**B1**

(12) **EUROPÄISCHE PATENTSCHRIFT**

(45) Veröffentlichungstag der Patentschrift : 12.11.86

(51) Int. Cl.⁴ : **A 01 F 25/20, A 01 F 29/00**

(21) Anmeldenummer : 83101360.2

(22) Anmeldetag : 12.02.83

(54) **Vorrichtung für die Auflockerung von aus einem Silo geschnittenen Silage-Blöcken.**

(30) Priorität : 15.02.82 DE 3205342
12.01.83 DE 3300754

(43) Veröffentlichungstag der Anmeldung :
24.08.83 Patentblatt 83/34

(45) Bekanntmachung des Hinweises auf die Patenterteilung : 12.11.86 Patentblatt 86/46

(84) Benannte Vertragsstaaten :
AT BE CH DE FR GB IT LI LU NL SE

(56) Entgegenhaltungen :
DE-A- 2 847 896
DE-A- 2 851 304
FR-A- 2 454 751
FR-A- 2 497 073

(73) Patentinhaber : Sprehe, Alfons
Hausnummer 33
D-2841 Harpendorf (DE)

(72) Erfinder : Sprehe, Alfons
Hausnummer 33
D-2841 Harpendorf (DE)

(74) Vertreter : Jabbusch, Wolfgang, Dr.
Elisabethstrasse 6
D-2900 Oldenburg (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung für die Auflockerung von aus einem Silo geschnittenen Silage-Blöcken, sowie für die dosierte Verteilung von aufgelockerter Silage, mit einer Blockaufnahme, die einen darin aufgenommenen Silage-Block umschließende Seitenwände aufweist, mit im wesentlichen im Bodenbereich der Blockaufnahme angeordneten zwangsgetriebenen, parallel zum Boden der Blockaufnahme ausgerichteten Auflockerungselementen, mit einem Förderorgan für die aufgelockerte Silage und mit mindestens einer im Förderweg des Förderorgans befindlichen Austragsöffnung.

Landwirtschaftliche Betriebe mit größeren Viehbeständen verfüttern an aufgestalltes Vieh, vor allen Dingen im Winter, häufig siliertes Futter. Die Lagerung und Silierung von geschnittenem Grünfutter, z. B. Gras oder Rübenblatt, aber auch von Mais erfolgt in sogenannten Fahrsilos. Dies sind gepreßte Anhäufungen der Futtermaterialien, die z. B. mit Abdeckplanen abgedeckt werden. Die im Fahrsilo festgepreßten Futtermassen können dann bei Bedarf verfüttert werden, indem Blöcke von z. B. 2 m³ Rauminhalt mit an sich bekannten Siloentnahme-Geräten aus dem Fahrsilo herausgeschnitten werden. Je nach Futterart haben solche Blöcke ein Gewicht von 0,5 bis 1,5 Tonnen und daraus ergibt sich, daß ihr Transport vom Fahrsilo zum Futterplatz einen Akkerschlepper oder dergleichen Hilfsgerät erfordert. Gewöhnlich kann der Transport eines ausgeschnittenen Silage-Blocks gleich mit dem Siloentnahme-Gerät durchgeführt werden, welches z. B. als Anbaugerät für einen Ackerschlepper ausgebildet sein kann.

Sobald der Block jedoch an die Fütterungsstelle transportiert ist, muß er auseinandergerissen und aufgelockert werden, damit die Verfütterung an das Vieh erfolgen kann. Das Auseinanderreißen und Auflockern der schweren Blöcke von Hand mit Forken oder dergleichen Handwerkzeugen ist schwierig und mühsam, wird jedoch nach wie vor praktiziert.

Aus der DE-AS 28 51 304 ist eine Vorrichtung zur Auflockerung und Verteilung von aus einem Silo geschnittenen Silage-Blöcken gemäß der eingangs genannten Gattung bekannt. Als Auflockerungselemente werden bei der bekannten Vorrichtung zwangsgetriebene schneckenförmige Rotoren eingesetzt, von denen ein Rotor nach Art einer Förderschnecke auch als Förderorgan zur Verteilung der aufgelockerten Silage durch eine Austragsöffnung genutzt werden kann.

Die aus der DE-AS 28 51 304 bekannten Auflockerungselemente sind jedoch in erster Linie zur Vermischung der Silage mit Zusatzfutterkomponenten und zur Verteilung des durchmischten Futters vorgesehen, während sie aufgrund ihrer Schneckenform für das Auflockern von Silage und erst recht für das Auseinanderreißen von Silage-Blöcken wenig geeignet sind.

Der Erfindung liegt die Aufgabe zugrunde, eine Vorrichtung zum Auflockern und Auseinanderreißen ausgeschnittener Silage-Blöcke zu schaffen.

In Lösung dieser Aufgabe ist eine Vorrichtung geschaffen worden, die sich dadurch auszeichnet, daß als Auflockerungselemente mehrere sich quer durch die Blockaufnahme erstreckende Wellen vorgesehen sind, von denen jede etwa radial abstehende Reißzähne aufweist, und daß jede Welle zur jeweils benachbarten Welle eine gegenläufige Schwenkbewegung ausführt.

In die Blockaufnahme kann ein ausgeschnittener Silage-Block einfach eingegeben werden, z. B. mit einem geeigneten Hebeoder Transportmittel. Durch sein Eigengewicht drückt der Silage-Block auf die zwangsgetriebenen Auflockerungselemente und wird je nach Arbeitsgeschwindigkeit des Antriebs der Auflockerungselemente nach und nach vollständig aufgelockert. Die aufgelockerte Silage wird von dem Förderorgan fortlaufend durch die Austragsöffnung nach außen gefördert. Wird die Blockaufnahme dabei gleichzeitig z. B. entlang einem Futtergang verfahren, kann während der Förderung des Förderorgans ein Schwad von Silagefutter fortlaufend und gleichmäßig dosiert an den Fütterungsstellen in einem Viehstall abgelegt werden.

Als Auflockerungselemente sind mit Vorteil mehrere parallel zum Boden der Blockaufnahme ausgerichtete und sich quer durch die Blockaufnahme erstreckende Wellen vorgesehen, von denen jede etwa radial abstehende Reißzähne aufweist.

Auf den Reißzähne aufweisenden Wellen kann der in die Blockaufnahme gesetzte Silage-Block aufliegen. Die Wellen können durch einfache Konstruktionsmittel angetrieben werden, so daß die Reißzähne die Unterseite des auf den Wellen ruhenden Silage-Blocks gut auflockern können. Die Auflockerung wird durch das Eigengewicht des Silage-Blocks begünstigt. Den Reißzähnen kann die Silage mit Vorteil nur wenig Widerstand entgegensetzen, so daß sich die Reißzähne verhältnismäßig tief in den Silage-Block eingraben, Silage aus dem Silage-Block herausreißen und so den Silage-Block auseinanderreißen können. Das Eindringen der Reißzähne in die Silage wird noch dadurch begünstigt, daß die Reißzähne vorzugsweise spitz und scharfkantig ausgebildet sind.

Die erfindungsgemäße Vorrichtung ermöglicht somit in vorteilhafter Weise die problemlose Auflockerung und das kraftvolle Auseinanderreißen von Silage-Blöcken, sowie gleichzeitig die dosierte Verteilung der aufgelockerten Silage, so daß das Auseinanderreißen eines Silage-Blocks und das Verteilen der aufgelockerten Silage von Hand entfallen kann.

Ein erfindungswesentliches Merkmal besteht darin, daß jede Welle zur jeweils benachbarten Welle eine gegenläufige Schwenkbewegung ausführt. Die Reißzähne sind damit keine umlaufenden Auflockerungswerkzeuge, wodurch die Vorrichtung zur Auflockerung sowohl von langfaseriger Grassilage als auch leichter bröckelnder Maissilage geeignet ist, weil sich insbesondere langfaserige Silage nicht um die hin- und herschwenkenden Wellen mit den Reißzähnen wickeln kann. Insbesondere schieben sich die Reißzähne einander benachbarter Wellen durch die gegenläufige Schwenkbewegung die Silage gegenseitig zu und drüken sie dabei auf die Reißzähne auf, wodurch die Eingriffskraft der Reißzähne erhöht und ein effektives Reißen ermöglicht wird.

Da die Blockaufnahme durch die den Silageblock umschließenden Seitenwände einen im großen und ganzen geschlossenen Kasten darstellt, treten während der Auflockerung des in der Aufnahme befindlichen Silage-Blocks keine Futterverluste durch herausfallende aufgelockerte Silage auf und die gesamte Masse des Blocks kommt in vorteilhafter Weise zur Verfütterung. Leicht verderbende Reste und Abfälle entstehen nicht.

Die Effektivität der Reißzähne wird durch eine Weiterbildung der erfindungsgemäßen Vorrichtung weiter dadurch erhöht, daß die Reißzähne jeder Welle wenigstens eine kammförmige Reihe bildend angeordnet sind, so daß sie die Silage in ausgedehnten Bereichen des Silage-Blockes nahezu lückenlos erfassen und herausreißen können.

Ein störungsfreier Betrieb der erfindungsgemäßen Vorrichtung wird dadurch weiter verbessert, daß zwischen zwei zueinander benachbarten kammförmigen Reihen von Reißzähnen einer Welle ein den keilförmigen Raum zwischen den Reihen verschließendes Abdeckelement angeordnet ist. Durch dieses Abdeckelement wird die wirksame Reißlänge der Reißzähne auf eine vorbestimmte Eindringtiefe in die Unterseite des aufzulockernden Silage-Blocks beschränkt wodurch sichergestellt ist, daß sich die Reißzähne während der pendelförmig hin- und herschwenkenden Bewegung der Wellen nicht in die Unterseite des Silage-Blocks lediglich eingraben, sondern daß tatsächlich ein schichtweises Auflockern erfolgt.

Diese vorteilhafte Wirkung wird bei einer Ausführungsform dadurch noch weiter verbessert, daß als Abdeckelement ein gewölbtes Blech vorgesehen ist, dessen Wölbungsscheitel sich etwa bis zu einer beiden Reihen von Reißzähnen einer Welle gemeinsamen gedachten Sehne erstreckt, die einen von den Reißzähnen während ihrer Schwenkbewegung beschriebenen Kreisbogen um die Wellenlängsachse schneidet. Die Anordnung von Abdeckelement und Reißzähnen ist damit derart vorteilhaft getroffen, daß die genannte gedachte Sehne mit der Unterseite des aufzulockernden Silage-Blocks zusammenfällt, so daß sich dieser in einer bestimmten Schwenkposition einer Welle im Bereich des Wölbungsscheitels auf dem Abdeckelement abstützt. Da eine Vielzahl von Wellen mit Reißzähnen in der Blockaufnahme angeordnet ist, werden bei bestimmten Schwenkpositionen der Wellen einige mit ihren Reißzähnen in die Unterseite des Silage-Blocks eindringen, während Abdeckelemente anderer Wellen den Block selbst auf einer vorbestimmten Höhe über den Boden der Blockaufnahme halten, in dessen Bereich sich das Förderorgan befindet, welches durch die in Eingriff befindlichen Reißzähne aufgelockerte Silage zur Austragsöffnung abführen kann.

Dieses Förderorgan kann z. B. als an sich bekannter Kratzbodenförderer ausgebildet sein. Daraus ergibt sich auch noch der Vorteil, daß je nach Wahl der Umlaufrichtung des Kratzbodenförderers die aufgelockerte Silage einer Austrittsöffnung an einer bestimmten Seite der Blockaufnahme zugeführt werden kann, ohne daß dafür besondere Konstruktionsmaßnahmen zu treffen sind. Es ist lediglich ein umsteuerbarer Antried für den Kratzbodenförderer vorzusehen.

Eine einfache Gestaltung der Austragsöffnungen ist dadurch möglich, daß in zwei einander gegenüberliegenden Seitenwänden der Blockaufnahme jeweils im Bereich der einseitigen Umlenkrollen des Kratzbodenförderers als Austragsöffnungen dienende Schlitze ausgespart sind. Die Abmessungen eines Schlitzes sind so gewählt, daß ein Stau aufgelokkerter abzuführender Silage nicht auftreten kann, so daß sich unter der Austragsöffnung außerhalb der Blockaufnahme ein gleichmäßiger Schwad von aufgelockerter Silage für die Verfütterung ablegen läßt.

Die dosierte Verteilung der aufgelockerten Silage durch die Austragsöffnungen wird dadurch weiter verbessert, daß die Außenseite jedes Schlitzes mit einem haubenförmigen Blech abgedeckt ist. Das haubenförmige Blech bietet zunächst auch eine Sicherung gegen Unfallgefahren, weil die Umlenkrollen des Kratzbodenförderers ohne die Bleche von außen innerhalb der Austragsöffnungen sichtbar und zugänglich wären. Die haubenförmigen Bleche haben jedoch auch den Vorteil, daß aus der Blockaufnahme abgeführte aufgelokkerte Silage im Verfütterungsbereich in mehr oder weniger gebündeltem verhältnismäßig dichtem Schwad zu liegen kommt.

Um ein Verstopfen der Austragsöffnungen zu vermeiden, ist vorgesehen, daß jedes Blech elastisch klappbar außen an der zugeordneten Seitenwand der Blockaufnahme angelenkt ist. Das haubenförmige Blech kann z. B. mit Scharnieren angelenkt werden und dabei unter Auslenkung einer Feder hochgeklappt werden, wobei die Federkraft so eingestellt werden kann, daß ein Förderstrom der vom Kratzbodenförderer nachgedrückten aufgelockerten Silage bei auftretenden Verstopfungen das Blech selbsttätig anheben kann.

Eine andere Ausführungsform der erfindungsgemäßen Vorrichtung sieht vor, daß eine Seitenwand der Blockaufnahme als zweiflügelige Klapptür ausgebildet ist. Die Klapptür hat den Vorteil, daß die an sich geschlossene Kastenform der Blockaufnahme geöffnet werden kann, um einen aufzulockernden Silage-Block einzugeben. Bei geöffneter Klapptür kann z. B. mit einem Ackerschlepper dicht an die Vorrichtung herangefahren werden, bis der auf den Zinken eines an sich bekannten, vom Ackerschlepper getragenen Siloentnahme-Geräts befindliche Silage-Block durch Absenken des Geräts, mittels der Dreipunktaufhängung des Ackerschleppers, auf den als Wellen ausgebildeten Auflockerungselementen zu liegen kommt. Durch anschließendes Rückwärtsfahren des Ackerschleppers können die Zinken herausgezogen werden und nach Schließen der Klapptüren ist der abgelegte Silage-Block von den Seitenwänden dicht umschlossen, so daß der Betrieb der Vorrichtung für das Auflockern des Silage-Blocks aufgenommen werden kann.

Die notwendige Antriebsenergie für das erfindungsgemäße Gerär kann ebenfalls vom Ackerschlepper bereitgestellt werden, und zwar z. B. über einen Zapfwellenanschluß. Vorteilhafter ist jedoch die Ausrüstung der Vorrichtung mit hydraulischen Antriebselementen, so daß deren Kreislauf lediglich noch an die Hydraulikanlage eines Ackerschleppers anzuschließen ist, was zum Beispiel auf einfachste Weise mit Schlauch-Schnell-Kupplungen möglich ist.

Die erfindungsgemäße Vorrichtung schafft einen weiteren Vorteil dadurch, daß eine Bodenplatte der Blockaufnahme eine Aufnahmetasche für die vorstehenden Zinken einer Transportgabel, insbesondere der Zinken eines an sich bekannten Siloentnahme-Gerätes zum Ausschneiden von Silage-Blöcken, aufweist. Durch diese Maßnahme ist es möglich, mit dem Akkerschlepper wieder so dicht an die Vorrichtung heranzufahren, daß die Zinken in die Aufnahmetasche eingreifen. Nach Verbinden der hydraulischen Antriebskreisläufe von Ackerschlepper und erfindungsgemäßer Vorrichtung kann das Gerät vom gleichen Ackerschlepper sowohl angetrieben, als über die Dreipunktaufhängung auch angehoben und im Viehstall für die dosierte Verteilung der aufgelockerten Silage verfahren werden.

Die derart ausgebildete erfindungsgemäße Vorrichtung bietet somit den Vorteil, mit einer Arbeitskraft und unter Einsatz eines einzigen vorhandenen Ackerschleppers, einen Block aus einem Fahrsilo herauszuschneiden und unmittelbar danach den frisch geschnittenen Block im Viehstall auch zu verfüttern.

Es ist jedoch auch möglich, die Blockaufnahme selbst von vornherein als Schlepperanbaugerät mit an sich bekannter Dreipunktaufhängung auszubilden.

Bei einer solchen Ausführung ist mit Vorteil vorgesehen, daß eine Seitenwand der Blockaufnahme als ein- und ausklinkbar mit der Blockaufnahme verbundene, an einen Ackerschlepper anbaubare Ballen-Transportgabel ausgebildet ist, welche in an die Blockaufnahme angesetzter Position in der Aufnahmetasche ruhende Transportzinken hat.

Obwohl diese Ausführungsform den Einsatz von zwei Ackerschleppern erfordern kann, nämlich einen Ackerschlepper, der das Siloentnahme-Gerät zum Ausschneiden der Silage-Blöcke trägt, und einen Ackerschlepper, an dessen Dreipunktaufhängung die mit Transportzinken ausgerüstete abnehmbare Seitenwand der Blockaufnahme ansetzbar ist, bietet diese Ausführungsform den Vorteil, daß bereits ausgeschnittene und somit zwischengelagerte Silage-Blöcke mit den Zinken der besonderen Seitenwand aufgenommen werden können und mit einem Ackerschlepper, der diese Seitenwand trägt, zum Aufstellungsort der erfindungsgemäßen Vorrichtung verfahren werden kann. Während der auf den Zinken ruhende Silage-Block auf den Auflockerungselementen abgesetzt wird, werden die Zinken wieder, wie vorbeschrieben, in der Aufnahmetasche versenkt und die Seitenwand kann mit der Blockaufnahme verbunden werden, was z. B. durch Klinken oder andere gebräuchliche Schnellverschlüsse möglich ist. Der transportierende Ackerschlepper kann auch die gesamte Blockaufnahme zusammen mit dem darin befindlichen Silage-Block wieder aufnehmen und, nach Anschluß der dem Ackerschlepper zugeordneten Hydraulikpumpe an den Hydraulikkreislauf der Antriebselemente der erfindungsgemäßen Vorrichtung, kann die dosierte Verteilung aufgelockerter Silage für die Verfütterung an das aufgestallte Vieh erfolgen.

Da es vorkommen kann, daß die ausgeschnittenen Silage-Blöcke unterschiedliche Abmessungen haben, ist u. U. ein Einschieben des Silage-Blocks in die Blockaufnahme in eine zur Auflockerung günstige Einschiebposition nicht möglich, weil die Seitenwand bereits vorher an die angrenzenden feststehenden Seitenwände der Blockaufnahme anschlägt. Insbesondere taucht dieses Problem bei Silage-Blöcken auf, deren Grundfläche kleiner ist als die Grundfläche der Blockaufnahme.

Zur Vermeidung dieses Nachteils sieht die Erfindung vor, daß seitliche Wandabschnitte der ein- und ausklinkbaren, als Transportgabel ausgebildeten Seitenwand um eine in der Seitenwandebene liegende Achse elastisch klappbar sind. Die als Transportgabel ausgebildete Seitenwand kann somit verhältnismäßig weit in den Innenraum der Blockaufnahme eingefahren werden, um auch kleinere Silage-Blöcke in eine geeignete Lage über die Auflockerungselemente zu bringen.

Es ist möglich, daß die Auflockerungselemente der Vorrichtung beim Auflockern von langfaserigen Grassilage-Blöcken nicht optimal arbeiten, wenn die Reißzähne der Auflockerungselemente eventuell zu kurz sind und daher nicht tief genug in den Silage-Block eindringen können, um die zusammengepreßte Silage aufzulockern. Ein einfaches Verlängern der Reißzähne jeder Reißzahnreihe würde zur Folge haben, daß zwar die Reißzähne tiefer in den Silage-Block eindringen könnten, jedoch verändern sich dabei die Drehmoment- und Kraftverhältnisse zwischen Wellen und Reißzähnen derart ungünstig, daß die Gefahr besteht, daß die in den Silage-Block eingedrungenen Reißzähne beim Durchreißen abbrechen.

Weiterhin liegt ein in die Vorrichtung eingegebener Silage-Block auf den Wellen auf und bei verlängerten Reißzähnen kann sich ein so unvorteilhafter Spreizwinkel zwischen Block und Reißzähnen ergeben, daß die Reißzähne den Block anheben.

Zur Vermeidung dieser Nachteile ist nach einer Weiterbildung, für die auch selbständiger Schutz beansprucht wird, vorgesehen, daß jede Welle an ihrer Umfangsfläche sitzende Lagerelemente aufweist, an denen die Reißzähne um eine zur jeweiligen Wellenachse parallele Schwenkachse schwenkbar angelenkt sind, und daß Sperrelemente vorgesehen sind, welche den Schwenkweg der Reißzähne zwischen einer etwa tangential zur Welle ausgerichteten Endstellung und einer etwa radial zur Welle ausgerichteten Endstellung begrenzen.

Die Maßnahme, die Reißzähne an jeder Welle schwenkbar anzulenken, hat den wesentlichen Vorteil, daß die Reißzähne während ihrer Mitnahme durch eine pendelnde Hin- und Herschwenkung der Wellen zusätzlich eine Art Hubbewegung ausführen, was zur Folge hat, daß jeder Reißzahn zunächst tief in einen Silage-Block eindringt, bevor er durch den Silage-Block hindurchgezogen wird. Jeder Reißzahn steht dazu in seiner Ruhestellung in einer etwa tangential zur jeweiligen Welle ausgerichteten Endstellung und dringt in dieser Stellung in einen in die Blockaufnahme eingegebenen Silage-Block ein. Bei einer Drehung der Welle werden die in den Silage-Block eingedrungenen Reißzähne jedoch nicht sofort durch den Block durchgerissen, sondern weiter in den Silage-Block hineingedrückt. Das erfolgt dadurch, daß die schwenkbar an den Wellen angelenkten Reißzähne in ihrer tangential zu Welle ausgerichteten Endstellung während der Drehung der Welle dem Silage-Block keinen Widerstand entgegensetzen können, sondern erst soweit verschwenkt werden müssen, bis die Sperrelemente die Reißzähne auf den Wellen festsetzen. Jeder Reißzahn befindet sich dann in seiner etwa radial zur Welle ausgerichteten anderen Endstellung. Ist diese Position erreicht, können bei einem Weiterdrehen der Welle die dann darauf festgesetzten Reißzähnen durch den eingegebenen Silage-Block durchgerissen werden. Das weitere Vordringen in den Silage-Block bzw. der Hubweg entspricht etwa der Entfernung des Lagerpunktes der Reißzähne vom Mittelpunkt der jeweiligen Welle. Das Sperrelement ist derart eingestellt, daß es jeden Reißzahn beim größtmöglichen Hub festsetzt, was bei einer etwa radial zur Welle ausgerichteten Endstellung der Reißzähne der Fall ist. Somit können die Reißzähne tief in einen Silage-Block eindringen und auch langfaserige Silage zerteilen bzw. auflockern.

Nach einer Weiterbildung der Erfindung ist vorgesehen, daß die Reißzähne und die Lagerelemente reihenförmig längs jeder Welle verteilt angeordnet sind, und daß einander benachbarte Reißzähne jeder Reißzahnreihe etwa rechtwinklig zueinander stehen. Durch diese Anordnung der Reißzähne steht von den zueinander benachbarten Reißzähnen, je nach Stellung und Drehbewegung der Wellen, immer jeweils der eine Reißzahn radial und der andere tangential von der zugeordneten Welle ab. Daraus ergibt sich der Vorteil, daß ein abwechselndes tiefes Eindringen der Reißzähne in den Silage-Block während der Drehungen der Wellen erfolgt, da der zunächst tangential von der zugeordneten Welle abstehende, in einen in die Vorrichtung eingegebenen Block eingedrungene Reißzahn zuerst in seine radiale Endstellung geführt wird, wobei er tiefer in den Block eindringt und dann durch den Block durchgerissen wird, und der zuvor radial abstehende Reißzahn währenddessen zwangsläufig, da die benachbarten Reißzähne rechtwinklig zueinander stehen, in seine tangentiale Stellung gebracht wird, so daß er dann, wenn der Drehsinn der Welle sich umkehrt, als tangentialer Reißzahn in die Silage eindringt. Der Vorgang des Einstechens der Reißzähne durch eine Art Hubbewegung wird somit auch bei pendelnd hin- und herdrehenden Wellen bei jeder Richtung ihrer Drehbewegungen abwechselnd ausgeführt.

Bei einer anderen Ausführungsform der Vorrichtung ist vorgesehen, daß die Reißzähne und die Sperrelemente auf der Schwenkachse angeordnet sind und daß die Schwenkachse endseitig in den Lagerelementen drehbar gelagert ist. Bei dieser Ausführung sind die Reißzähne fest auf der parallel zur Welle ausgerichteten Schwenkachse angeordnet und die Schwenkachse führt die Schwenkbewegung der Reißzähne aus. Diese erfindungsgemäße Maßnahme vereinfacht wesentlich die Herstellung der Auflockerungselemente, da eine aufwendige Lagerung jedes einzelnen Reißzahnes entfallen kann und nur die parallel zu den Wellen ausgerichteten Schwenkachsen auf den Wellen schwenkbar gelagert werden müssen.

Weiterhin ist erfindungsgemäß vorgesehen, daß jedes Sperrelement ein von der Schwenkachse vorstehender gegen die Welle anschlagender Anschlaglappen ist. Dadurch ist eine einfache und betriebssichere Begrenzung der Endstellung der Reißzäne bzw. der Schwenkachse gegeben.

Nach einer weiteren Weiterbildung ist vorgesehen, daß einander gegenüberliegende Reißzähne einander benachbarter Wellen miteinander kämmen. Durch das Kämmen der Reißzähne einander benachbarter Wellen wird in vorteilhafter Weise eine Abstreifwirkung erzielt, so daß sich an den Reißzähnen kein Silagegut festsetzen kann.

Weiterhin ist vorgesehen, daß als Reißzähne Stangen mit angespitzten freien Enden vorgesehen sind. Durch die angespitzten freien Enden wird ein Eindringen der Reißzähne in die Unterseite eines in die Vorrichtung eingegebenen Silage-Blockes erleichtert. Als Stangen können runde Stangen, Vierkantstangen o. dgl. vorgesehen sein, die beliebig kräftig dimensioniert sind.

Ausführungsbeispiele der Erfindung, aus denen sich weitere erfinderische Merkmale ergeben, sind in der Zeichnung dargestellt. Es zeigen :

Figur 1 eine perspektivische Ansicht einer teilweise aufgeschnittenen Vorrichtung gemäß einer ersten Ausführung,

Figur 2 eine perspektivische Ansicht einer Vorrichtung gemäß einer zweiten Ausführung, bei der eine Seitenwand als abnehmbare Transportgabel ausgebildet ist,

Figur 3 eine perspektivische Teilansicht des Bodenbereichs der Vorrichtung gemäß Fig. 1 und Fig. 2 mit den Auflockerungselementen und dem Förderorgan,

Figur 4 einen schematischen Querschnitt durch eines der in Fig. 3 dargestellten Auflockerungselemente,

Figur 5 eine perspektivische Teilansicht des Bodenbereichs der erfindungsgemäßen Vorrichtung mit Förderorgan und mit einer anderen Ausbildung der Auflockerungselemente,

Figur 6 eine Seitenansicht eines Auflockerungselements gemäß Fig. 5 und

Figur 7 die Arbeitsweise der Vorrichtung mit den Auflockerungselementen nach Fig. 5 und 6 in einer schematischen Darstellung.

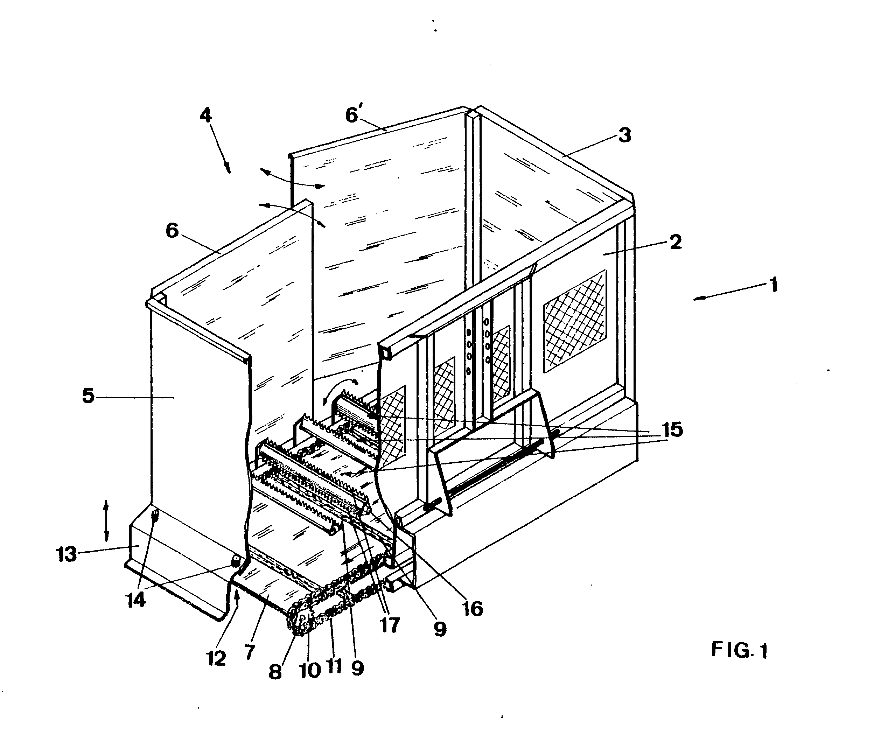

In Fig. 1 ist eine Vorrichtung zum Auflockern und dosierten Verteilen von aufgelockerter Silage perspektivisch und teilweise aufgeschnitten dargestellt.

Die Vorrichtung besteht aus der Blockaufnahme 1 mit hochgezogenen Seitenwänden 2, 3, 4 und 5 von denen die Längsseitenwand 2 und die Querseitenwände 3 und 5 feststehen und die Längsseitenwand 4 durch zwei Klappbare Flügel 6 und 6' als Klapptür ausgebildet ist, die bei Bedarf geöffnet werden kann.

Der gesamte Aufbau der Blockaufnahme mit den Seitenwänden ist im wesentlichen kastenförmig. Im Bodenbereich der Blockaufnahme befindet sich ein als Kratzbodenförderer 7 ausgebildetes Förderorgan, das im wesentlichen aus um zwei endseitige Umlenkrollen 8 laufenden Ketten 11 ausgebildet ist, welche mit Kratzbodenleisten 9 in regelmäßigen Abständen verbunden sind. Mit 10 sind auf den Umlenkrollen 8 sitzende Kettenräder für die umlaufend getriebenen Ketten 11 bezeichnet. Die feststehenden Querseitenwände 3 und 5 weisen im unteren Bereich ausgesparte, als Schlitze ausgebildete Austragsöffnungen 12 auf, die nach außen mit einem haubenförmigen Blech 13 abgedeckt sind. Die Bleche sind mit bei diesem Ausführungsbeispiel lediglich schematisch angedeuteten Schrauben und Federn 14 mehr oder weniger klappbar mit den festen Querseitenwänden 3 und 5 der Blockaufnahme verbunden und können dadurch elastisch nachgeben, wenn vom Kratzbodenförderer nachgedrückte aufgelockerte Silage die Austragsöffnung verstopfen will.

In einem vorbestimmten Abstand über dem Kratzbodenförderer 7 sind Auflockerungselemente 15 angeordnet. Diese bestehen aus mehreren, parallel zueinander angeordneten Wellen 16, die sich quer durch die Blockaufnahme 1 erstrecken und über einen nicht weiter dargestellten Antried in pendelnde bzw. schaukelnde, hin- und hergehende Drehbewegungen versetzt werden können. Jede Welle ist mit zwei kammförmigen Reihen radial abstehender Reißzähne 17 besetzt, durch welche der zwischen den Seitenwänden der Blockaufnahme 1 aufgenommene Silageblock an seiner Unterseite aufgelockert wird und die aufgelockerte Silage letztlich auf den Kratzbodenförderer 7 fällt und je nach Förderrichtung des Kratzbodenförderers von den über den Kratzboden gezogenen Kratzbodenleisten 9 zu einer der Austragsöffnungen 12 gefördert wird.

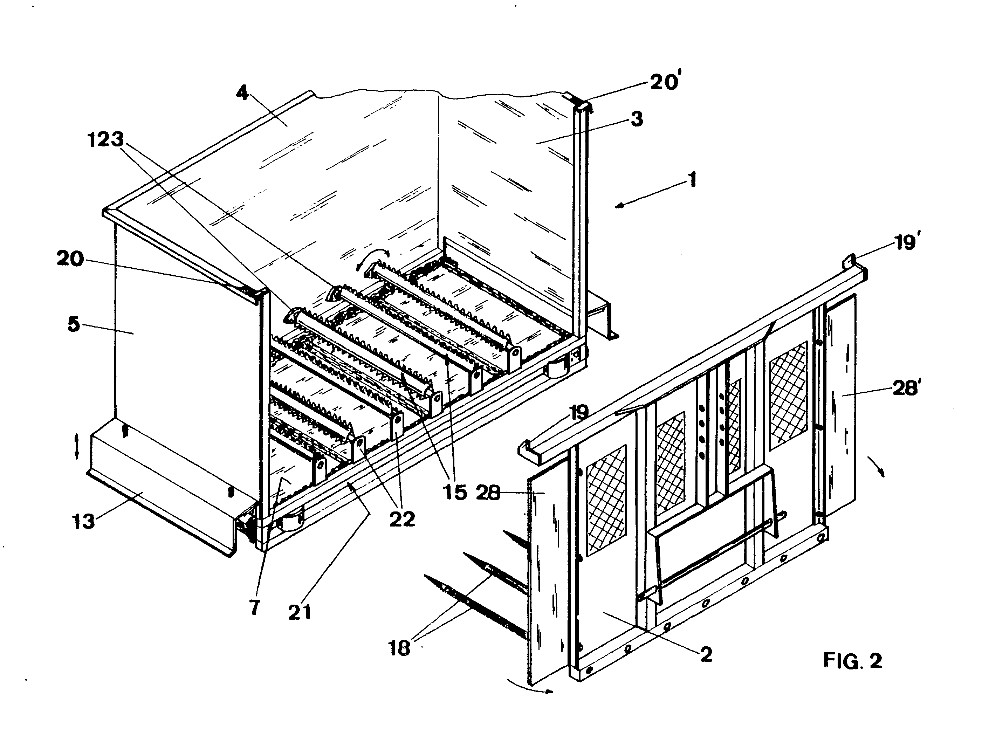

In Fig. 2 ist eine andere Ausführungsform der Vorrichtung perspektivisch dargestellt. Gleiche Bauteile sind mit gleichen Bezugszahlen versehen. Bei dieser Ausführung besteht die Blockaufnahme 1 aus den drei feststehenden Seitenwänden 3, 4 und 5. Die Längsseitenwand 2 ist jedoch als mit der Blockaufnahme 1 ein- und ausklinkbar verbundene Block-Transportgabel ausgebildet und weist im unteren Bereich lotrecht abstehende Zinken 18 auf, mit denen ein bereits ausgeschnittener Silage-Block aufgenommen werden kann. Die ein- und ausklinkbare, als Transportgabel ausgebildete Seitenwand ist an der dem Inneren der Blockaufnahme abgekehrten Außenseite mit den Elementen für die Verbindung mit einer Dreipunktaufhängung eines Ackerschleppers versehen, welche nicht weiter beschrieben werden. Die Enden der oberen Kante der Längsseitenwand 2 sind, wie dargestellt, mit Klinken 19 und 19' ausgerüstet, welche in Rastelemente 20 und 20' an den feststehenden Querseitenwänden 3 und 5 der Blockaufnahme 1 verrastet werden können, wodurch die Blockaufnahme durch die als Transportgabel ausgebildete Seitenwand 2 wieder verschlossen ist. Seitliche Wandabschnitte 28 und 28' sind um eine in der Seitenwandebene liegende Achse elastisch klappbar.

Im Boden der Blockaufnahme 1 befindet sich unter dem Kratzbodenförderer 7 eine schlitzförmige Aufnahmetasche 21, welche die Zinken 18 bei angesetzter Längsseitenwand 2 aufnimmt.

Bei angesetzter Längsseitenwand kann die Blockaufnahme 1 ebenso von einem Ackerschlepper bewegt und transportiert werden, wie es bei der vorbeschriebenen Ausführung der Fig. 1 der Fall ist.

Fig. 2 zeigt auch, daß die Endseiten der Wellen 16 der Auflockerungselemente 15 in Wellenlagern 22 gelagert sind. An der den Wellenlagern gegenüberliegenden Seite sind Wellenstümpfe in Lagern 123 abgestützt, welche in die Seitenwand 4 der Blockaufnahme eingelassen sind. Die durch die Seitenwand 4 nach außen vorragenden, bei diesem Ausführungsbeispiel nicht sichtbaren Wellenstümpfe, können mit Antriebselementen für ihre pendelnde Hin- und Herbewegung gekoppelt werden.

Der Antrieb ist dabei so gestaltet, daß jeweils zueinander benachbarte Auflockerungselemente gegenläufige Bewegungen durchführen.

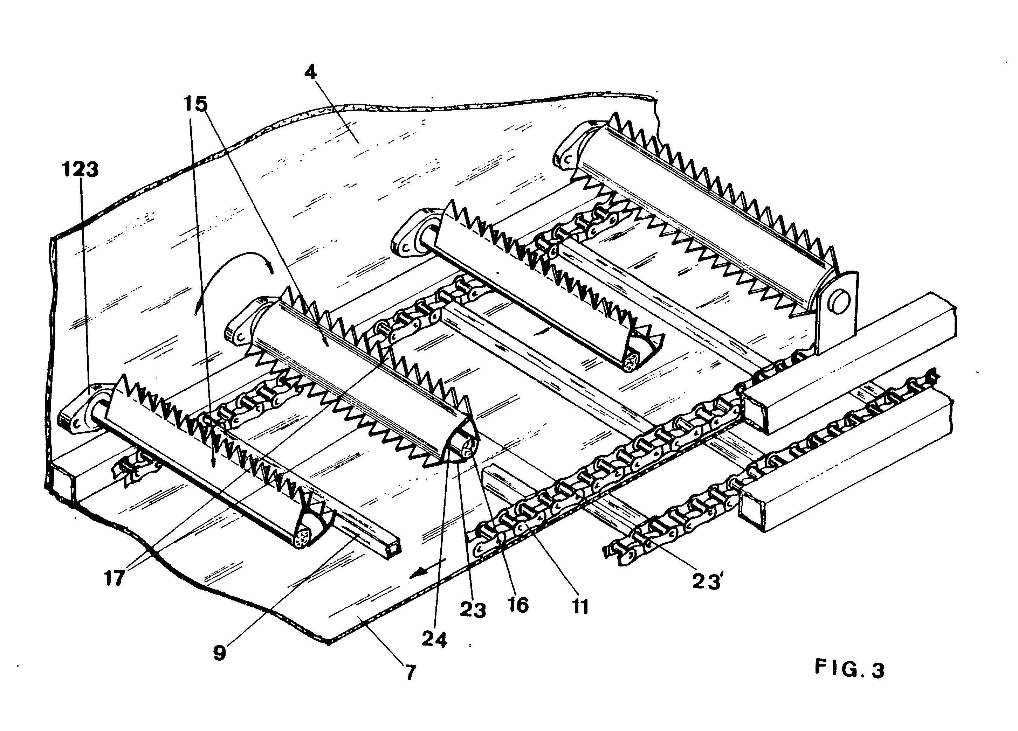

In Fig. 3 ist ein Ausschnitt aus einem Bodenbereich der Blockaufnahme 1 mit den Auflockerungselementen noch einmal perspektivisch vergrößert dargestellt. Gleiche Bauteile sind wieder mit gleichen Bezugszahlen versehen. Aus dieser Zeichnung ist ersichtlich, daß an jede Welle 16 keilförmig zueinander stehende Kammleisten 23 bzw. 23' angeschweißt sind. Die freien Längskanten jeder Kammleiste sind durch entsprechende Ausstanzungen zu Reißzähnen 17 ausgeformt.

Aus Fig. 3 ist ebenfalls ersichtlich, daß der keilförmige Hohlraum zwischen den beiden Kammleisten 23, 23' jeder Welle 16 durch ein Abdeckelement 24 verschlossen ist. Das Abdeckelement ist ein Blech, welches mit einem von der Achse der Welle 16 ausgehenden Radius gewölbt ist.

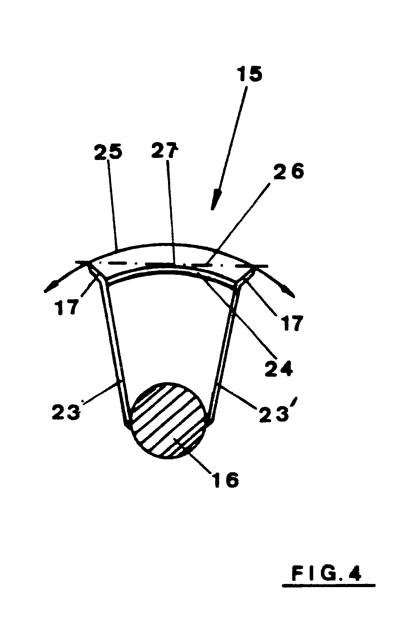

In Fig. 4 ist ein schematischer Querschnitt durch ein Auflockerungselement 15 dargestellt. Die beiden keilförmig zueinanderstehenden, an die Welle 16 geschweißten Kammleisten 23 und 23' sind im Bereich der durch Ausstanzungen geformten Reißzähne 17 abgebogen und die äußere Spitze der Reißzähne bewegt sich bei einer pendelnden Drehbewegung der Welle 16 auf dem Kreisbogen-Doppelpfeil 25. Eine gedachte Sehne 26, dargestellt durch eine strichpunktierte Linie, verläuft durch die Berührungspunkte der äußeren Spitzen der Reißzähne 17 mit dem Kreisbogen-Doppelpfeil 25 und das radiusförmig gewölbte Blech 24 ist dabei an den beiden Kammleisten 23 und 23' in einer solchen Entfernung von der Welle 16 angebracht, daß die gedachte Sehne 26 das Blech 24 in dessen Wölbungsscheitel 27 tangiert.

Während des Betriebs der erfindungsgemäßen Vorrichtung fällt die durch eine strichpunktierte Linie dargestellte gedachte Sehne 26 mit der Unterseite eines aufzulockernden Silage-Blocks zusammen und aus Fig. 4 ist somit ersichtlich, daß das gewölbte Blech 24 den Silage-Block während der Auflockerung durch die pendelnde Hin- und Herbewegung der Welle 16 und der Reißzähne 17 trägt und stützt, so daß die Zähne nicht zu tief in die aufzulockernde Silage eindringen können, woraus andernfalls resultieren würde, daß ein Auflockerungselement 15 lediglich eine Vertiefung in die Unterseite des Silage-Blocks graben würde ; die auflockernde Auflösung des Blocks jedoch nicht erreicht wird.

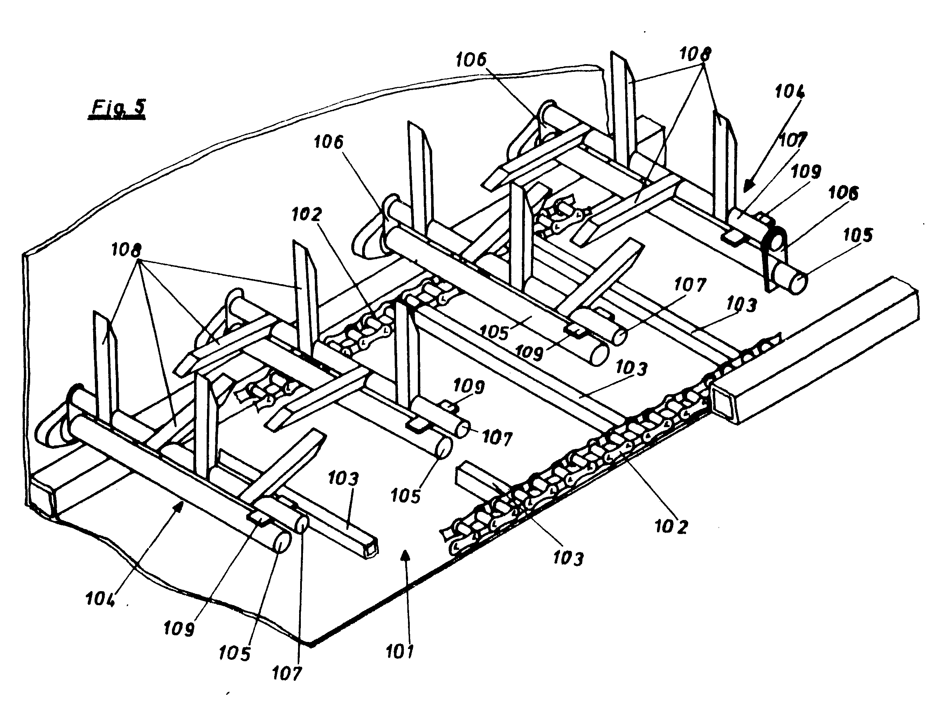

Im Bodenbereich der in Figur 5 dargestellten Vorrichtung, befindet sich ebenfalls ein als Kratzbodenförderer 101 ausgebildetes Förderorgan mit umlaufenden, zwangsgetriebenen Ketten 102, die mit Kratzbodenleisten 103 in regelmäßigen Abständen verbunden sind. In einem vorbestimmten Abstand von dem Kratzbodenförderer 101 sind die Auflockerungselemente 104 in Seitenwänden der Vorrichtung gelagert angeordnet. Diese bestehen aus mehreren, parallel zueinander angeordneten Wellen 105, die sich quer durch die Vorrichtung erstrecken und über einen nicht dargestellten Antrieb in eine pendelnd hin- und hergehende Drehbewegung versetzt werden können. In diesem Ausführungsbeispiel sind an jeder Welle 105 in von den Wellen vorstehenden Lagerelementen 106 die Enden einer parallel zur Welle 105 ausgerichteten Achse 107 schwenkbar gelagert. Auf der Achse 107 sind reihenförmig längs der Achse verteilt angeordnete Reißzähne 108 befestigt. Einander benachbarte Reißzähne stehen etwa rechtwinklig zueinander. Weiterhin sind an der Achse 107 von der Achse vorstehende Anschlaglappen 109 befestigt, die den Schwenkweg der Achse begrenzen.

Das in Figur 6 dargestellte Auflockerungselement 104 läßt erkennen, daß die einander benachbarten Reißzähne 108, 108a auf der Achse 107 etwa rechtwinklig zueinander stehen. Der Reißzahn 108 steht etwa radial zur Welle 105 und der 108a etwa tangential. Der Reißzahn 108a ist bereits in die Unterseite eines hier nur angedeuteten Silage-Blocks 110 eingedrungen. Die Funktionsweise der Anschlaglappen 109, die an der Achse 107 befestigt sind, welche die Reißzähne 108, 108a trägt, besteht darin, daß sie bei einer Drehung der Achse 107 gegen die Oberfläche der Welle 105 anschlagen und somit eine weitere Drehung der Achse sperren. Von den beidseitig der Achse 107 abstehenden Anschlaglappen 109 ist einer dem Reißzahn 108a zugeordnet, während der andere dem Reißzahn 108 zugeordnet ist. Die Anschlaglappen 109 sind so an der Achse 107 befestigt, daß sie an der Oberfläche der Welle 105 anschlagen, wenn der zugeordnete Reißzahn 108, 108a radial zur Welle steht.

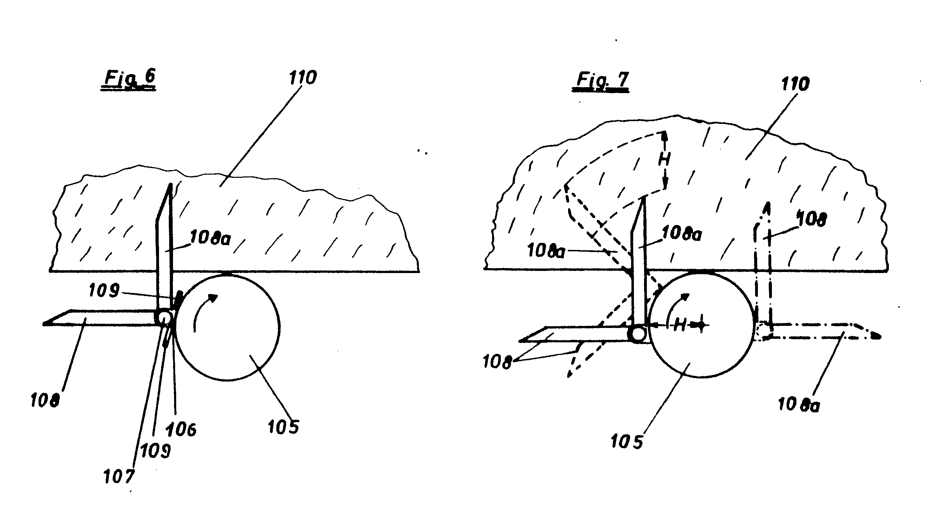

In Figur 7 ist schematisch die Arbeitsweise der Auflockerungselemente 104 dargestellt. Das Auflockerungselement 104 steht hier in einer möglichen Ausgangsstellung. Die Welle 105 steht in einer Drehstellung, bei der der Reißzahn 108a, der sich dabei in seiner tangentialen Endstellung zur Welle befindet, mit seinem freien Ende gegen den Silage-Block 110 vorsteht und darin eingedrungen ist. Der rechtwinklig zum Reißzahn 108a stehende andere Reißzahn 108 ist dabei noch nicht in den Silageblock eingedrungen. Bei der Drehung der Welle 105 in Pfeilrichtung wird der Reißzahn 108a in eine radiale Stellung zur Welle 105 überführt, wobei er tiefer in den Silage-Block vordringt.

Diese radiale Stellung ist durch gestrichelte Linien angedeutet. Der Reißzahn 108a führt dabei eine Art Hubbewegung aus, die dem Radius H vom Mittelpunkt der Welle 105 bis zum Lagerpunkt des Reißzahn 108a auf dem Umfang der Welle entspricht. Da die Reißzähne 108, 108a rechtwinklig zueinander stehen, wird der Reißzahn 108, der ebenfalls auf der gleichen Achse sitzt, um die der Reißzahn 108a schwenkt, dabei gleichzeitig in seine tangentiale Endstellung zur Welle 105 gebracht. Danach erfolgt ein Durchreißen des tief in den Silageblock 110 eingedrungenen Reißzahns 108a durch den Block hindurch, bis er seine strichpunktiert dargestellte Endstellung erreicht hat. In dieser Endstellung ist der Reißzahn 108a aus dem Silage-Block 110 herausgetreten und der während des Durchreißens ebenfalls in den Silage-Block 110 eingetretene Reißzahn 108 verbleibt in seiner tangentialen Endstellung im Silage-Block 110. Bei einer Umkehrung der Drehrichtung der Welle führt dann der Reißzahn 108 die zuvor beschriebene Hubbewegung aus, wobei er ebenfalls um den Hubweg H tiefer in den Silage-Block 110 eindringt.

**Patentansprüche**

1. Vorrichtung für die Auflockerung von aus einem Silo geschnittenen Silage-Blöcken, sowie für die dosierte Verteilung von aufgelockerter Silage, mit einer Blockaufnahme (1), die einen darin aufgenommenen Silage-Block umschließende Seitenwände (2, 3, 4, 5) aufweist, mit im wesentlichen im Bodenbereich der Blockaufnahme angeordneten zwangsgetriebenen, parallel zum Boden der Blockaufnahme ausgerichteten Auflockerungselementen (15), mit einem Förderorgan für die aufgelockerte Silage und mit mindestens einer im Förderweg des Förderorgans (7) befindlichen Austragsöffnung (12), dadurch gekennzeichnet, daß als Auflockerungselemente (15) mehrere sich quer durch die Blockaufnahme erstreckende Wellen (16) vorgesehen sind, von denen jede etwa radial abstehende Reißzähne (17) aufweist, und daß jede Welle (16) zur jeweils benachbarten Welle eine gegenläufige Schwenkbewegung ausführt.

2. Vorrichtung nach Anspruch 1, dadurch gekennzeichnet, daß die Reißzähne (17) jeder Welle wenigstens eine kammförmige Reihe bildend angeordnet sind.

3. Vorrichtung nach Anspruch 2, dadurch gekennzeichnet, daß zwischen zwei zueinander benachbarten kammförmigen Reihen von Reißzähnen (17) einer Welle (16) ein den keilförmigen Raum zwischen den Reißzahn-Reihen verschließendes Abdeckelement (24) angeordnet.

4. Vorrichtung nach Anspruch 3, dadurch gekennzeichnet, daß als Abdeckelement ein gewölbtes Abdeckblech (24) vorgesehen ist, dessen Wölbungsscheitel (27) sich etwa bis zu einer beiden Reihen von Reißzähnen (17) gemeinsamen gedachten Sehne (26) erstreckt, die einen von den Reißzähnen während ihrer Schwenkbewegung beschriebenen Kreisbogen (25) um die Welle (16) schneidet.

5. Vorrichtung nach einem der vorhergehenden Ansprüche, insbesondere nach Anspruch 1, dadurch gekennzeichnet, daß das Förderorgan als an sich bekannter Kratzbodenförderer (7) der Blockaufnahme (1) ausgebildet ist.

6. Vorrichtung nach einem der vorhergehenden Ansprüche, dadurch gekennzeichnet, daß in zwei einander gegenüberliegenden Seitenwänden (3, 5) der Blockaufnahme (1) jeweils im Bereich der jeweiligen Umlenkrollen (8) des Kratzbodenförderers (7) als Austragsöffnungen (12) dienende Schlitze ausgespart sind.

7. Vorrichtung nach Anspruch 6, dadurch gekennzeichnet, daß die Außenseite jedes Schlitzes mit einem haubenförmigen Blech (13) abgedeckt ist.

8. Vorrichtung nach Anspruch 7, dadurch gekennzeichnet, daß jedes Blech (13) elastisch Klappbar außen an der zugeordneten Außenwand (3, 5) der Blockaufnahme (1) angelenkt ist.

9. Vorrichtung nach einem der vorhergehenden Ansprüche, dadurch gekennzeichnet, daß eine Seitenwand (4) der Blockaufnahme (1) als zweiflügelige Klapptür ausgebildet ist.

10. Vorrichtung nach einem der vorhergehenden Ansprüche, dadurch gekennzeichnet, daß eine Bodenplatte der Blockaufnahme (1) eine Aufnahmetasche (21) für die vorstehenden Zinken (18) eines an sich bekannten Siloentnahme-Gerätes zum Ausschneiden von Silage-Blöcken aufweist.

11. Vorrichtung nach einem der vorhergehenden Ansprüche, dadurch gekennzeichnet, daß die Blockaufnahme (1) als Schlepperanbaugerät mit an sich bekannter Dreipunktaufhängung ausgebildet ist.

12. Vorrichtung nach einem der vorhergehenden Ansprüche, dadurch gekennzeichnet, daß eine Seitenwand (2) der Blockaufnahme (1) als ein- und ausklinkbar mit der Blockaufnahme verbindbare an einen Ackerschlepper anbaubare Block-Transportgabel ausgebildet ist, welche in an die Blockaufnahme angesetzter Position in der Aufnahmetasche (21) ruhende Transportzinken (18) hat.

13. Vorrichtung nach Anspruch 12, dadurch gekennzeichnet, daß seitliche Wandabschnitte (28, 28') der ein- und ausklinkbaren, als Transportgabel ausgebildeten Seitenwand (2) um eine in der Seitenwandebene liegende Achse elastisch klappbar sind.

14. Vorrichtung nach einem der vorhergehenden Ansprüche, insbesondere nach Anspruch 1, dadurch gekennzeichnet, daß jede Welle (105) an ihrer Umfangsfläche sitzende Lagerelemente (106) aufweist, an denen die Reißzähne (108) um eine zur jeweiligen Wellenachse parallele Schwenkachse (107) schwenkbar angelenkt sind, und daß Sperrelemente (109) vorgesehen sind, welche den Schwenkweg der Reißzähne (108) zwischen einer etwa tangential zur Welle (105) ausgerichteten Endstellung und einer etwa radial zur Welle ausgerichteten Endstellung begrenzen.

15. Vorrichtung nach Anspruch 14, dadurch gekennzeichnet, daß die Reißzähne (108) und die Lagerelemente (106) reihenförmig längs jeder Welle (105) verteilt angeordnet sind, und daß einander benachbarte Reißzähne (108) jeder Reißzahnreihe etwa rechtwinklig zueinander stehen.

16. Vorrichtung nach einem der Ansprüche 14 oder 15, dadurch gekennzeichnet, daß die Reißzähne (108) und die Sperrelemente (109) auf der Schwenkachse (107) angeordnet sind und daß die Schwenkachse endseitig in den Lagerelementen (106) drehbar gelagert ist.

17. Vorrichtung nach einem der Ansprüche 14 bis 16, dadurch gekennzeichnet, daß jedes Sperrelement (109) ein von der Schwenkachse (107) vorstehender gegen die Welle (105) anschlagender Anschlaglappen (109) ist.

18. Vorrichtung nach einem der Ansprüche 14 bis 17, dadurch gekennzeichnet, daß einander gegenüberliegende Reißzähne (108) einander benachbarter Wellen (105) miteinander kämmen.

19. Vorrichtung nach einem der Ansprüche 14 bis 18, dadurch gekennzeichnet, daß als Reißzähne (108) Stangen mit angespitzten freien Enden vorgesehen sind.

**Claims**

1. A device for loosening silage blocks cut from a silo and for the metered distribution of loosened silage, having a block receptacle (1), which comprises lateral walls (2, 3, 4, 5) enclosing the silage block contained within the said block receptacle, having loosening elements (15), which are arranged substantially in the base region of the block receptacle and parallel to the base of the block receptacle, and which are positively driven, having a conveying member for the loosened silage and having at least one discharge opening (12) arranged in the conveying path of the conveying member (7), characterised in that a plurality of shafts (16) extending transversely through the block receptacle are provided, each of which comprises shredding teeth (17) which project substantially radially, and each shaft (16) effects a rotating movement in the opposite direction to the respective adjacent shaft.

2. A device according to claim 1, characterised in that the shredding teeth (17) of each shaft are arranged so as to form at least one comb-shaped row.

3. A device according to claim 2, characterised in that a covering element (24) is arranged between two adjacent comb-shaped rows of shredding teeth (17) of a shaft (16), which covering element (24) closes off the wedge-shaped space between the rows of shredding teeth.

4. A device according to claim 3, characterised in that a curved cover plate (24) is provided as a covering element, the crown (27) of the curve of the said cover plate (24) extending approximately as far as an imaginary chord (26), which is common to both rows of shredding teeth (17), and which intersects an arc (25) described by the shredding teeth during their rotating movement about the shaft (16).

5. A device according to any one of the preceding claims, more particularly according to claim 1, characterised in that the conveying member is designed as a base scraping conveyor (7) known per se of the block receptacle (1).

6. A device according to any one of the preceding claims, characterised in that slots acting as discharge openings (12) are formed in two oppositely disposed lateral walls (3, 5) of the block receptacle (1), in the region of the respective reversing rollers (8) of the base scraping conveyor (7) in each case.

7. A device according to claim 6, characterised in that the outside of each slot is covered with a hood-shaped plate (13).

8. A device according to claim 7, characterised in that each plate (13) is resiliently pivotably mounted on the outside of the associated outer wall (3, 5) of the block receptacle (1).

9. A device according to any one of the preceding claims, characterised in that a lateral wall (4) of the block receptacle (1) is designed as a two-leaf flap door.

10. A device according to any one of the preceding claims, characterised in that a base plate of the block receptacle (1) comprises a receiving pocket (21) for the projecting prongs (18) of a silo extraction device known per se for cutting out silage blocks.

11. A device according to any one of the preceding claims, characterised in that the block receptacle (1) is designed as a tractor attachment having a three-point suspension known per se.

12. A device according to any one of the preceding claims, characterised in that a lateral wall (2) of the block receptacle (1) is designed as a block conveying fork, which may be connected to the block receptacle such that it may be engaged and disengaged, which may be hitched onto a tractor, and which comprises conveying prongs (18), which rest in the receiving pocket (21) in the position in which the block conveying fork is connected to the block receptacle.

13. A device according to claim 12, characterised in that lateral wall sections (28, 28') of the lateral wall (2), which may be engaged and disengaged and which is designed as a conveying fork, are resiliently pivotable about an axis disposed in the plane of the lateral wall.

14. A device according to any one of the preceding claims, more particularly according to claim 1, characterised in that each shaft (105) comprises bearing elements (106) seated on its peripheral surface, to which bearing elements (106) the shredding teeth (108) are coupled so as to pivot about a pivot axle (107), which is parallel to the respective shaft axis, and locking elements (109) are provided, which define the pivot path of the shredding teeth (108) between an end position which is approximately tangential to the shaft (105) and an end position which is approximately radial to the shaft.

15. A device according to claim 14, characterised in that the shredding teeth (108) and the bearing elements (106) are distributed in rows along each shaft (105), and adjacent shredding teeth (108) in each row are arranged approximately at right angles to one another.

16. A device according to either claim 14 or 15, characterised in that the shredding teeth (108) and the locking elements (109) are arranged on the pivot axle (107), and the pivot axle is rotatably mounted with its ends in the bearing elements (106).

17. A device according to any one of claims 14 to 16, characterised in that each locking element (109) is a stop bar (109), which projects from the pivot axle (107) and which strikes the shaft (105).

18. A device according to any one of claims 14 to 17, characterised in that opposite shredding teeth (108) of adjacent shafts mesh with one another.

19. A device according to any one of claims 14 to 18, characterised in that bars with pointed free ends are provided as shredding teeth (108).

## Revendications

1. Dispositif pour désagréger des blocs d'ensilage coupés provenant d'un silo, ainsi que pour distribuer de manière dosée le fourrage ensilé désagrégé, comportant un réceptacle de blocs (1) qui présente des parois latérales (2, 3, 4, 5) enfermant un bloc d'ensilage, des éléments de désagrégation (15) à entraînement forcé, disposés sensiblement dans la zone du fond du réceptacle, parallèlement au fond de celui-ci, un organe de convoyage (7) pour l'ensilage désagrégé et au moins une ouverture d'évacuation (12) située sur le parcours de l'organe de convoyage, caractérisé en ce qu'il est prévu comme élément de désagrégation (15) plusieurs arbres (7) s'étendant transversalement au réceptacle des blocs, dont chacun présente des dents d'arrachage (17) radiales et en ce que chaque arbre (7) effectue un mouvement de pivotement en sens contraire à celui de l'arbre voisin.

2. Dispositif selon la revendication 1, caractérisé en ce que les dents d'arrachage (17) de chaque arbre sont disposées pour former au moins une rangée en forme de peigne.

3. Dispositif selon la revendication 2, caractérisé en ce qu'un élément de couverture (24) est disposé entre deux rangées voisines en forme de peigne de dents d'arrachage (17) d'un arbre (16) pour fermer l'espace en forme de coin ménagé entre les rangées de dents d'arrachage.

4. Dispositif selon la revendication 3, caractérisé en ce que l'élément de couverture est une tôle de couverture (24) cintrée dont le sommet de la courbure (27) s'étend jusqu'à une corde (26) imaginaire commune aux deux rangées de dents d'arrachage (17) qui coupe un arc de cercle (27) décrit par les dents d'arrachage pendant leur mouvement de pivotement autour de l'arbre (16).

5. Dispositif selon l'une des revendications 1 à 4, notamment selon la revendication 1, caractérisé en ce que l'organe de convoyage est un convoyeur à raclettes (7) connu en soi du réceptacle de blocs (1).

6. Dispositif selon l'une des revendications 1 à 5, caractérisé en ce que des fentes servant d'ouvertures d'extraction (12) sont pratiquées dans deux parois latérales (3, 5) opposées du réceptacle de blocs, dans la zone des poulies de renvoi (8) du convoyeur à raclettes (7).

7. Dispositif selon la revendication 6, caractérisé en ce que le côté extérieur de chaque fente est recouvert d'une tôle (13) en forme de capot.

8. Dispositif selon la revendication 7, caractérisé en ce que chaque tôle (13) s'articule de manière élastique et rabattable à l'extérieur de la paroi extérieure (3, 5) concernée du réceptacle de blocs (1).

9. Dispositif selon l'une des revendications 1 à 8, caractérisé en ce qu'une paroi latérale (4) du réceptacle de blocs (1) est une porte à trappe à deux vantaux.

10. Dispositif selon l'une des revendications 1 à 9, caractérisé en ce qu'une plaque de fond du réceptacle de blocs (1) est un logement (21) pour les pointes (18) saillantes d'un appareillage de désilage connu en soi destinées à découper les blocs d'ensilage.

11. Dispositif selon l'une des revendications 1 à 10, caractérisé en ce que le réceptacle de blocs (1) est un outil tracté avec un attelage trois points connu en soi.

12. Dispositif selon l'une des revendications 1 à 11, caractérisé en ce qu'une paroi latérale (2) du réceptacle de blocs (1) est une fourche de manutention de blocs pouvant être assemblée, par encliquetage et décrochage, au réceptacle des blocs et montée sur un tracteur, cette fourche présentant des pointes de manutention (18) reposant dans le logement (21) en position montée sur le réceptacle de blocs.

13. Dispositif selon la revendication 12, caractérisé en ce que des tronçons de parois latérales (28, 28') de la paroi latérale (2) en forme de fourche de manutention pouvant être encliquetée et décrochée, sont rabattables de manière élastique autour d'un axe situé dans le plan de la paroi latérale.

14. Dispositif selon l'une des revendications 1 à 13, notamment selon la revendication 1, caractérisé en ce que chaque arbre (105) présente sur sa surface périphérique des éléments de support (106) sur lesquels s'articulent les dents d'arrachage (108) de manière à pouvoir pivoter autour d'un axe de pivotement (107) parallèle à l'axe de l'arbre considéré, et en ce qu'il est prévu des éléments de blocage (109) qui limitent la course des dents d'arrachage (108) entre une position finale approximativement tangentielle à l'arbre (105) et une position finale approximativement radiale à l'arbre.

15. Dispositif selon la revendication 14, caractérisé en ce que les dents d'arrachage (108) et les éléments de support (106) sont répartis en rangs le long de chaque arbre (105) et en ce que les dents d'arrachage (108) juxtaposées de chaque rangée de dents d'arrachage sont disposées approximativement perpendiculairement les unes aux autres.

16. Dispositif selon l'une des revendications 14 ou 15, caractérisé en ce que les dents d'arrachage (108) et les éléments de blocage (109) sont disposés sur l'axe de pivotement (107) et en ce que l'axe de pivotement est monté en rotation à l'extrémité des éléments de support (106).

17. Dispositif selon l'une des revendications 14 à 16, caractérisé en ce que chaque élément de blocage (109) est une languette de butée (109) faisant saillie par rapport à l'axe de pivotement (107) et venant buter contre l'arbre (105).

18. Dispositif selon l'une des revendications 14 à 17, caractérisé en ce que des dents d'arrachage (108) opposées engrènent dans celles des arbres voisins (105).

19. Dispositif selon l'une des revendications 14 à 18, caractérisé en ce qu'il est prévu comme dents d'arrachage (108) des tiges aux extrémités libres effilées.

FIG. 1

FIG. 2

FIG. 3

0 086 478

FIG. 4

_Fig. 5_

0 086 478

Fig. 6

Fig. 7